# EUROPÄISCHE PATENTSCHRIFT

(11) **EP 1 034 990 B1**
(45) Veröffentlichungstag und Bekanntmachung des Hinweises auf die Patenterteilung: **03.08.2005**
(21) Anmeldenummer: 00104517.8
(22) Anmeldetag: 10.03.2000
(51) Int. Cl.: B60R 22/46, B60R 22/195

(54) **Gurtstraffersystem mit Kolben-Zylinder-Einheit und Schubstange**
Belt pretensionning device with a piston-cylinder arrangement and a sliding shank
Prétensionneur de ceinture avec ensemble piston-cylindre et tige coulissante

(30) Priorität: 10.03.1999 DE 29904404 U
(43) Veröffentlichungstag der Anmeldung: 13.09.2000
(73) Patentinhaber: TRW Automotive GmbH, 73553 Alfdorf (DE)
(72) Erfinder: Betz, Hans-Peter, 73560 Böbingen (DE); Fliedner, Remy, 73565 Spraitbach (DE)
(74) Vertreter: Kitzhofer, Thomas, Dipl.-Ing.

(56) Entgegenhaltungen:
- EP-A- 0 884 226
- DE-A- 2 726 096
- DE-A- 2 811 694
- DE-A- 3 829 694
- DE-B- 1 269 505
- US-A- 5 704 638
- PATENT ABSTRACTS OF JAPAN vol. 018, no. 319 (M-1623), 17. Juni 1994 (1994-06-17) & JP 06 072289 A (HINO MOTORS LTD), 15. März 1994 (1994-03-15)

## Beschreibung

Die Erfindung betrifft ein Gurtstraffersystem, nach dem Oberbegriff des Anspruchs 1.

Gurtstraffersysteme mit einer Kolben-Zylinder-Einheit sind auch als sogenannte Linearstraffer bekannt. Sie können als Endbeschlag- oder Schloßstraffer ausgebildet sein. Darüber hinaus sind Gurtstraffersysteme bekannt, bei denen das Kraftübertragungsmittel zwischen dem Endbeschlag und dem an der B-Säule angebrachten Umlenkbeschlag an dem Gurt angreift und den Gurt nach unten zieht. Die bisher bekannten Gurtstraffersysteme haben den Nachteil, daß sie sehr groß bauen und daß die langgestreckte Kolben-Zylinder-Einheit meist vom Fahrzeugboden aus vertikal nach oben wegsteht. Die bekannten Gurtstraffersysteme benötigen einen sehr großen Bauraum, so daß ihre Unterbringung im Fahrzeug Probleme aufwirft. Darüber hinaus ist die Abdichtung des Zugseils, welches das Kraftübertragungsmittel bildet, gegenüber der Stirnwand des Zylinders, durch die sich das Zugseil erstreckt, problematisch. Nur mit hohem Aufwand ist hier eine gute Abdichtung möglich.

Ein Gurtstraffersystem mit den Merkmalen des Oberbegriffs des Anspruchs 1 ist aus der DE-A-27 26 096 bekannt. Bei diesem System wird eine Kolbenstange aus einer in den Zylinder eingeschobenen Ausgangsstellung in eine Spannstellung herausgedrückt, wobei der Sicherheitsgurt von der Kolbenstange unter Bildung einer Schlaufe zwischen zwei Umlenkstellen mitgenommen wird.

Eine Gurtstraffvorrichtung mit einem ähnlichen Straffprinzip ist in der DE-A-28 11 694 gezeigt, bei der ein an einer Kolbenstange befestigter Querstab den Sicherheitsgurt zwischen zwei Umlenkstellen in Form einer Schleife herausdrückt.

Bei dem aus der JP-A-06072289 bekannten Gurtstraffersystem wird der Sicherheitsgurt mit Hilfe eines hydraulisch angetriebenen Kolbens gestrafft, wobei an dem Kolben eine Kolbenstange mit einer Rolle befestigt ist, die am Sicherheitsgurt angreift.

In der EP-A-884 226 ist ein Gurtstraffer mit einem Kolben/Zylinder-Linearantrieb gezeigt, bei dem ein an der Stimfläche des Kolbens gebildetes Angrifffselement vom Sicherheitsgurt zwischen einem Umlenkelement und einem am Fahrzeugaufbau verankerten Ende des Sicherheitsgurts umschlungen wird.

Die Erfindung schafft ein klein bauendes und einfach aufgebautes Gurtstraffersystem, welches sich durch eine hohe Variabilität des Einbaus im Fahrzeug auszeichnet. Dies wird bei einem Gurtstraffersystem der eingangs genannten Art durch die kennzeichnenden Merkmale des Anspruchs 1 erreicht.

Die Verwendung einer Schubstange in Verbindung mit einer Gurtumlenkung sorgt für einen geringen Bauraum des Gurtstraffersystems. Die Umlenkung des Gurtes wird durch die Schubstange erreicht, die den Scheitelbereich des umgelenkten Gurtes definiert und diesen Scheitelbereich axial verschiebt. Beim Verschieben der Schubstange wandert der Abschnitt der Schubstange, der am Gurt angreift, am Gurt entlang und verschiebt den Scheitelbereich in axialer Richtung. Da die Schubstange zwischen den um 180° umgelenkten Gurtbandabschnitten angeordnet ist und den Scheitelbereich verschiebt, wird das Gurtband bei einem Kolbenweg s um 2 mal s, also die doppelte Strecke, verschoben. Die Kolben-Zylinder-Einheit samt Antriebssystem kann deshalb bei gleichem Straffweg kurz und klein bauen. Das erfindungsgemäße Gurtstraffersystem baut axial auch deshalb kurz, da die Schubstange und die Kolben-Zylinder-Einheit samt Antrieb zwischen den umgelenkten Gurtbandabschnitten liegen, also vom Gurt umgeben sind. Bei einer Anordnung der Kolben-Zylinder-Einheit außerhalb des durch die umgelenkten Bereiche definierten Raumes wäre der axiale Bauraum des Gurtstraffersystems um die axiale Länge der Kolben-Zylinder-Einheit samt damit verbundenem Antrieb verlängert.

Der Gurt wird in einem Gehäuse umgelenkt. Die Schubstange und die Kolben-Zylinder-Einheit samt Antrieb sind als separates, vormontiertes Modul ausgebildet. Dieses Modul kann unabhängig vom Gehäuse und vom Gurt transportiert werden und erst am Ende des Montagevorgangs in das Gehäuse gesteckt und an ihm oder am Fahrzeug angebracht werden. Somit ergibt sich eine Art Baukastenprinzip, das eine sogenannte Montagetrennung zwischen Sicherheitsgurt und Strafferantrieb (Kolben-Zylinder-Einheit mit Antrieb) erlaubt. Beim Stand der Technik sind üblicherweise komplette Baugruppen aus Sicherheitsgurt und Strafferantrieb notwendig, die für die Montage im Fahrzeug unhandlich und nur mit erhöhtem Aufwand arretierbar sind. Beim erfindungsgemäßen Gurtstraffersystem kann der Gurt bereits vollständig in das Fahrzeug eingebaut sein. Anschließend wird durch Befestigen des vormontierten Moduls das Gurtstraffersystem komplettiert.

Wenn die Schubstange an ihrem der Kolben-Zylinder-Einheit entfernten Ende eine am Gurt angreifende gekrümmte und den Scheitelbereich definierende Gurtanlagefläche hat, ergibt sich eine reibungsärmere Relativbewegung zwischen der Anlagefläche und dem Gurt. Zudem muß die Anlagefläche so ausgebildet sein, daß ein Abgleiten des Gurtes beim Straffvorgang von der Anlagefläche ausgeschlossen ist. Um dies zu erreichen, hat die Schubstange einen langgestreckten, parallel zur Verschieberichtung verlaufenden Abschnitt und einen an das bandseitige Ende dieses langgestreckten Abschnitts anschließenden, sich quer hierzu erstreckenden Abschnitt. Dieser quer zum langgestreckten Abschnitt verlaufende Abschnitt hat die gekrümmte Gurtanlagefläche.

Der Gurt verläuft im oder unmittelbar außerhalb des Gehäuses durch einen Umlenkbeschlag hindurch und erstreckt sich nach dem Umlenkbeschlag im wesentlichen quer zur Längsachse des Zylinders. Bei dieser Ausgestaltung kann das insgesamt langgestreckt ausgebildete Gurtstraffersystem liegend, d.h. horizontal und parallel zum Fahrzeugboden eingebaut werden. Seine Lage kann aber durch den Umlenkbeschlag zwischen dem Gurtstraffersystem und dem außerhalb des Gurtstraffersystems verlaufenden Gurt variiert werden, ohne daß es eines anderen Aufbaus des Gurtstraffersystems bedarf.

Die Kolben-Zylinder-Einheit ist vorzugsweise am Umlenkbeschlag befestigt. Dies hat den Vorteil, daß die Kolben-Zylinder-Einheit bzw. die gesamte Baugruppe aus Kolben-Zylinder-Einheit mit Antrieb und das Gehäuse samt dem darin umgelenkten Gurt nicht über separate Öffnungen im Fahrzeug befestigt werden müssen. Befestigungsöffnungen im Fahrzeug haben nämlich große Toleranzen zueinander. Wenn jedoch die Kolben-Zylinder-Einheit am Umlenkbeschlag befestigt ist, können diese beiden Teile im Bereich ihrer Befestigung in engen Toleranzen hergestellt werden, was die Montage vereinfacht. Darüber hinaus kann die Kolben-Zylinder-Einheit natürlich auch am Gehäuse oder an einem Endbeschlag arretiert sein. Hier ergeben sich dieselben gerade genannten Vorteile bei der Montage und der Fertigung.

Um Bauhöhe zu sparen, die insbesondere vom Durchmesser des Zylinders abhängt, können anstatt einer Kolben-Zylinder-Einheit auch mehrere parallelgeschaltete Einheiten vorgesehen sein, die miteinander gekoppelt sind. Eine weitere Möglichkeit, Bauhöhe zu sparen, besteht darin, einen ovalen oder rechteckigen Zylinder zu wählen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Ausführungsform des erfindungsgemäßen Gurtstraffersystems mit aufgeschnittenem Gehäuse und aus dem Gehäuse entfernten Antrieb samt Kolben-Zylinder-Einheit,
- Figur 2 eine Perspektivansicht eines anderen Antriebskonzepts mit zwei parallelen Kolben-Zylinder-Einheiten und miteinander gekoppeltem Antrieb,
- Figuren 3 bis 5 verschiedene Querschnitte für den Zylinder der Kolben-Zylinder-Einheit.

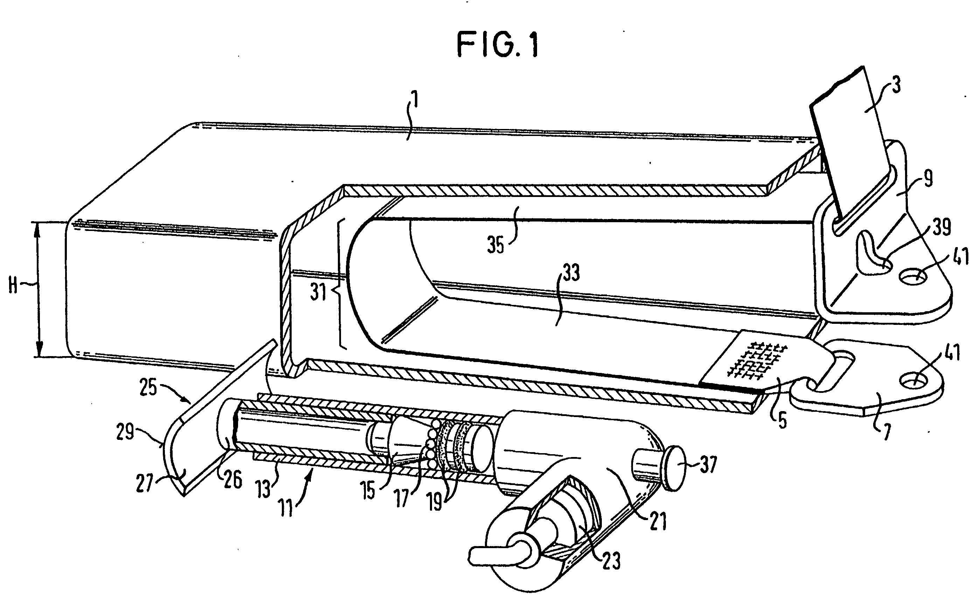

In Figur 1 ist ein Gurtstraffersystem dargestellt, das in dem in Figur 1 gezeigten liegenden Zustand an einem Fahrzeugboden eines Kraftfahrzeugs angebracht werden kann. Das Gurtstraffersystem besteht aus einem Gehäuse 1, welches kastenförmig ist, und einem Sicherheitsgurt 3, der an einem Ende 5 an einem Endbeschlag 7 arretiert ist. Der Gurt 3 verläuft von diesem Ende 5 aus in das Innere des Gehäuses, wird darin unter Bildung einer Schlaufe um 180° umgelenkt und verläuft anschließend wieder zu dem stirnseitigen Ende des Gehäuses 1, an dem auch der Endbeschlag 7 liegt. Der Gurt 3 erstreckt sich durch einen L-förmig gebogenen Umlenkbeschlag 9 und wird hier um etwa 90° nach oben umgelenkt, so daß er zu einem weiteren Umlenkbeschlag, der in Schulterhöhe an der B-Säule des Fahrzeugs befestigt ist, verlaufen kann.

Das Gehäuse 1 kann den Endbeschlag 7 und den Umlenkbeschlag 9 teilweise oder vollständig umgeben, es muß jedoch auf jeden Fall wenigstens eine geeignete Öffnung aufweisen, damit sich das Band 3 vor oder nach dem Umlenkbeschlag 9 aus dem Gehäuse 1 heraus erstrecken kann.

Das Gurtstraffersystem hat darüber hinaus eine Kolben-Zylinder-Einheit 11, die aus einem Zylinder 13 und einem Kolben 15 besteht. Am konusförmigen Kolben 15 sind Sperrkugeln 17 angeordnet. Mit dem Bezugszeichen 19 sind Dichtungen bezeichnet, die den Kolben 15 gegenüber dem Zylinder 13 abdichten sollen. Ein am Zylinder 13 befestigter Antrieb 21 mit einem Gasgenerator 23 sorgt im Rückhaltefall für eine Verschiebung des Kolbens in axialer Richtung. Am Kolben 15 ist auf einem Absatz des Kolbens ein Kraftübertragungsmittel in Form einer Schubstange 25 befestigt. Die Schubstange 25 hat einen rohrförmigen, sich parallel zur Verschieberichtung erstreckenden Abschnitt und einem am bandseitigen Ende dieses langgestreckten Abschnitts angebrachten, sich quer hierzu erstreckenden Abschnitt 27. Dieser Abschnitt 27 ist zum Beispiel durch Schweißen am langgestreckten Abschnitt 26 befestigt und hat eine gekrümmte Form mit einer teilkreisförmigen Gurtanlagefläche 29.

Die Kolben-Zylinder-Einheit 11 samt Antrieb 21 bilden ein separates, vormontiertes Modul. Bei der Montage des Gurtstraffersystems kann zuerst der Gurt 3 im Fahrzeug montiert werden, indem der Endbeschlag 7 direkt am Fahrzeug oder am Gehäuse 1 befestigt wird. Das Gehäuse 1 kann vorher, gleichzeitig oder anschließend am Fahrzeugboden angebracht werden. Schließlich wird das vormontierte Modul mit Kolben-Zylinder-Einheit 11 und Antrieb 21 vorzugsweise axial in das Gehäuse 1 eingeschoben. Der Gurt 3 liegt dabei an der Gurtanlagefläche 29 an und wird durch diese umgelenkt. Der Bereich, in dem der Gurt 3 umgelenkt wird, wird im Folgenden Scheitelbereich 31 genannt. Vor und nach dem Scheitelbereich ergeben sich Gurtbandabschnitte 33 und 35.

Der Antrieb 21 hat an seiner Rückseite einen pilzartigen Vorsprung 37, auf den von oben der Umlenkbeschlag 9 gesteckt wird, indem dieser eine Art Schlüssellochöffnung 39 aufweist, in die der Vorsprung ragt. Diese Schlüssellochöffnung 39 wird dann geschlossen, wenn der Umlenkbeschlag 9 auf den Endbeschlag 7 aufgesetzt wird und zusammen mit ihm über Öffnungen 41 am Fahrzeug oder dem langgestreckten Gehäuse 1 angeschraubt wird.

Indem das Modul aus Antrieb 21 und Kolben-Zylinder-Einheit 11 zwischen den Gurtbandabschnitten 33 und 35 liegt, ergibt sich ein geringer axialer Bauraum.

Im Rückhaltefall wird der Kolben 15 gemäß Figur 1 nach links verschoben, so daß die Schubstange 25 ebenfalls nach links verschoben wird und der langgestreckte Abschnitt 26 noch weiter aus dem Zylinder 13 herausragt. Der Scheitelbereich 31 wandert noch tiefer in das Gehäuse 1, so daß die Gurtbandabschnitte 33 und 35 länger werden. Als Straffweg für den Gurt ergibt sich die doppelte Strecke des Kolbens, die dieser beim Verschieben zurücklegt.

Bei der in Figur 1 dargestellten Ausführungsform liegt die Schubstange 25 mit dem Abschnitt 27 nicht am Gehäuse 1 an. Jedoch kann es zu Führungszwecken sinnvoll sein, wenn eine Führung zwischen dem Abschnitt 27 und dem Gehäuse vorgesehen ist. Diese Führung kann zum Beispiel dadurch erreicht werden, daß Zapfen an dem Abschnitt 27 in Ausnehmungen im Gehäuse 1 aufgenommen werden. Theoretisch wäre es bei dieser Ausführungsform sogar möglich, das Kraftübertragungsmittel aus mehreren nicht permanent miteinander verbundenen Teilen zu bilden.

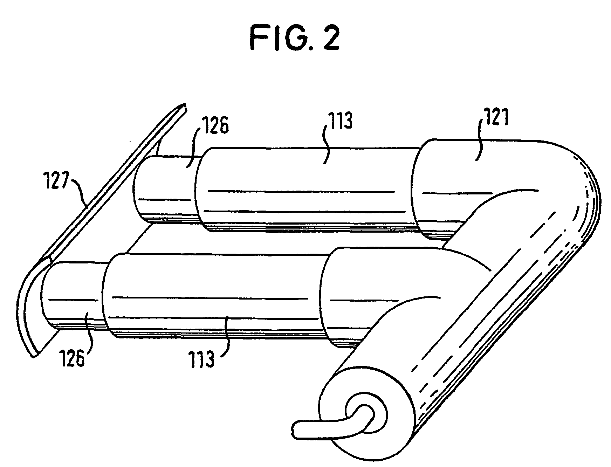

Wenn das Gurtstraffersystem eine noch geringere Bauhöhe H aufweisen soll, kann es vorteilhaft sein, zwei Kolben-Zylinder-Einheiten 113 parallel zueinander anzuordnen, die zum Beispiel mit einem Antrieb 121 gekoppelt sind, wie dies in Figur 2 dargestellt ist.

Die beiden langgestreckten Abschnitte 126 der Schubstangen sind dann über einen gemeinsamen quer hierzu verlaufenden Abschnitt 127 miteinander verbunden.

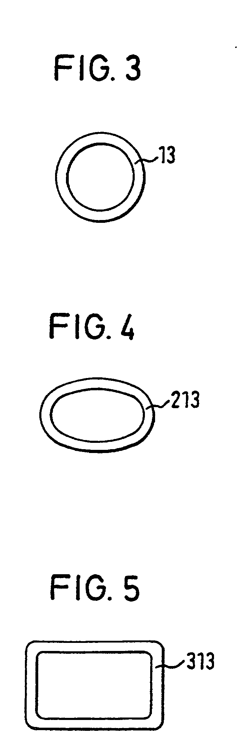

Eine weitere Möglichkeit, Bauhöhe zu sparen, besteht darin, anstatt des in Figur 3 gezeigten kreiszylindrischen Querschnitts des Zylinders 13 einen ovalen Querschnitt gemäß Figur 4 für den Zylinder 213 oder einen rechteckigen, gestreckten Querschnitt für einen Zylinder 313 gemäß Figur 5 vorzusehen.

## Patentansprüche

1. Gurtstraffersystem, mit
einem Sicherheitsgurt (3),
einer Kolben-Zylinder-Einheit (11),
einem Antrieb (21; 121) für die Kolben-Zylinder-Einheit (11), und
einer Schubstange (25), die mit der Kolben-Zylinder-Einheit (11) und
wenigstens im Rückhaltefall mit dem Gurt (3) direkt verbunden ist und die beim Aktivieren des Antriebs (21; 121) in der Kolben-Zylinder-Einheit (11) hervorgerufene Bewegung in eine Verschiebung des Gurtes (3) umsetzt,
**dadurch gekennzeichnet,**
**daß** sich der Gurt (3) in das Innere eines Gehäuses (1) erstreckt und darin durch die Schubstange (25) unter Bildung einer U-förmigen Schlaufe mit einem Scheitelbereich (31) und zwei Schenkeln (33, 35) um 180° umgelenkt wird, wobei die Schubstange (25) am Scheitelbereich (31) angreift und diesen axial verschiebt, und
**daß** der Antrieb (21; 121), die Kolben-Zylinder-Einheit (11) und die Schubstange (25) ein separates, vormontiertes Modul bilden, das im Gehäuse (1) vollständig zwischen den beiden Schenkeln (33, 35) der Schlaufe angeordnet ist.

2. Gurtstraffersystem nach Anspruch 1, **dadurch gekennzeichnet, daß** die Schubstange (25) an ihrem der Kolben-Zylinder-Einheit (11) entfernten Ende eine am Gurt (3) angreifende gekrümmte und den Scheitelbereich (31) definierende Gurtanlagefläche (29) hat.

3. Gurtstraffersystem nach Anspruch 2, **dadurch gekennzeichnet, daß** die Schubstange (25) aus einem langgestreckten, parallel zur Verschieberichtung verlaufenden Abschnitt (26; 126) und aus einem sich an das bandseitige Ende des langgestreckten Abschnitts (26; 126) anschließenden, quer hierzu erstreckenden Abschnitt (27; 127) mit der gekrümmten Gurtanlagefläche (29) besteht.

4. Gurtstraffersystem nach Anspruch 3, **dadurch gekennzeichnet, daß** der Gurt (3) durch einen dem Gehäuse zugeordneten Umlenkbeschlag (9) hindurch verläuft und sich nach dem Umlenkbeschlag (9) quer zur Längserstreckung des Zylinders (13) erstreckt.

5. Gurtstraffersystem nach Anspruch 4, **dadurch gekennzeichnet, daß** die Kolben-Zylinder-Einheit (11) am Umlenkbeschlag (9) befestigt ist.

6. Gurtstraffersystem nach Anspruch 5, **dadurch gekennzeichnet, daß** die Kolben-Zylinder-Einheit (11) an ihrem der Schubstange (25) entfernten axialen Ende einen pilzartigen Vorsprung (37) hat, der in einer Schlüssellochöffnung (39) im Umlenkbeschlag (9) arretiert ist.

7. Gurtstraffersystem nach Anspruch 6, **dadurch gekennzeichnet, daß** die Schlüssellochöffnung (39) durch Befestigen des Umlenkbeschlags (9) geschlossen ist.

8. Gurtstraffersystem nach einem der vorhergehenden Ansprüche, **dadurch gekennzeichnet, daß** der Zylinder (213; 313) im Querschnitt oval oder rechteckig ist.

9. Gurtstraffersystem nach einem der vorhergehenden Ansprüche, **dadurch gekennzeichnet, daß** mehrere Kolben-Zylinder-Einheiten (11) mit parallelen Zylindern (113) vorgesehen und die zugeordneten Schubstangen (25) miteinander gekoppelt sind.

10. Gurtstraffersystem nach einem der vorhergehenden Ansprüche, **dadurch gekennzeichnet, daß** die Schubstange (25) am Kolben (15) unmittelbar befestigt ist und sich durch das dem Antrieb (21) entfernte, offene Ende des Zylinders (13) hindurch nach außen erstreckt.

## Claims

1. A belt tensioner system comprising
a safety belt (3),
a piston/cylinder unit (11),
a drive (21; 121) for the piston/cylinder unit (11), and
a push rod (25) which is directly connected with the piston/cylinder unit (11) and, at least in the case of restraint, with the belt (3), and which converts the movement produced in the piston/cylinder unit (11) on activation of the drive (21; 121) into a displacement of the belt (3),
**characterized in that**
the belt (3) extends into the interior of a housing (1) and is deflected therein through 180° by the push rod (25) to form a U-shaped loop having an apex region (31) and a pair of legs (33, 35), the push rod (25) engaging the apex region (31) and displacing it axially, and
that the drive (21; 121), the piston/cylinder unit (11) and the push rod (25) constitute a separate, preassembled module which is arranged in the housing (1) completely between the two legs (33, 35) of the loop.

2. The belt tensioner system according to claim 1, **characterized in that** the push rod (25) has at its end away from the piston/cylinder unit (11) a curved belt contact surface (29) engaging the belt (3) and defining the apex region (31).

3. The belt tensioner system according to claim 2, **characterized in that** the push rod (25) consists of an elongated section (26; 126) running parallel to the displacement direction and of a section (27; 127) adjoining the end of the elongated section (26; 126) on the webbing side, extending transversely hereto and having the curved belt contact surface (29).

4. The belt tensioner system according to claim 3, **characterized in that** the belt (3) runs through a deflection fitting (9) associated with the housing and, after running through the deflection fitting (9), extends transversely to the longitudinal extent of the cylinder (13).

5. The belt tensioner system according to claim 4, **characterized in that** the piston/cylinder unit (11) is fastened to the deflection fitting (9).

6. The belt tensioner system according to claim 5, **characterized in that** at its axial end away from the push rod (25), the piston/cylinder unit (11) has a mushroom-like projection (37), which is arrested in a keyhole opening (39) in the deflection fitting (9).

7. The belt tensioner system according to claim 6, **characterized in that** the keyhole opening (39) is closed by fastening the deflection fitting (9).

8. The belt tensioner system according to any of the preceding claims, **characterized in that** the cylinder (213; 313) is oval or rectangular in cross-section.

9. The belt tensioner system according to any of the preceding claims, **characterized in that** a plurality of piston/cylinder units (11) having parallel cylinders (113) is provided and the associated push rods (25) are coupled with each other.

10. The belt tensioner system according to any of the preceding claims, **characterized in that** the push rod (25) is fastened directly to the piston (15) and extends outwards through the open end of the cylinder (13) away from the drive (21).

## Revendications

1. Système prétensionneur de ceinture, comportant
une ceinture de sécurité (3),
une ensemble piston-cylindre (11)
un entraînement (21 ; 121) pour l'ensemble piston-cylindre (11), et
une tige de poussée (25) qui est reliée directement avec l'ensemble piston-cylindre (11) et, au moins en cas de retenue, avec la ceinture (3), et qui transforme en un déplacement de la ceinture (3) le mouvement provoqué dans l'ensemble piston-cylindre (11) lorsque l'entraînement (21 ; 121) est activé,
**caractérisé en ce que**
la ceinture (3) s'étend à l'intérieur d'un boîtier (1) et est déviée de 180° dans celui-ci par la tige de poussée (25) en formant une boucle en forme de U avec une région de sommet (31) et deux branches (33, 35), la tige de poussée (25) s'engageant sur la région de sommet (31) et déplaçant celle-ci axialement, et
**en ce que** l'entraînement (21 ; 121), l'ensemble piston-cylindre (11) et la tige de poussée (25) forment un module séparé préassemblé qui est agencé dans le boîtier (1) entièrement entre les deux branches (33, 35) de la boucle.

2. Système prétensionneur de ceinture selon la revendication 1, **caractérisé en ce que** la tige de poussée (25) présente à son extrémité éloignée de l'ensemble piston-cylindre (11) une surface d'application de ceinture (29) incurvée s'engageant sur la ceinture (3) et définissant la région de sommet (31).

3. Système prétensionneur de ceinture selon la revendication 2, **caractérisé en ce que** la tige de poussée (25) est constituée par un tronçon (26 ; 126) allongé s'étend parallèlement à la direction de déplacement et par un tronçon (27 ; 127) adjacent à l'extrémité, côté sangle, du tronçon (26 ; 126) allongé, s'étendant transversalement à celui-ci et comportant la surface d'application de ceinture (29) incurvée.

4. Système prétensionneur de ceinture selon la revendication 3, **caractérisé en ce que** la ceinture (3) passe à travers une ferrure de renvoi (9) associée au boîtier et s'étend après la ferrure de renvoi (9) transversalement à l'extension longitudinale du cylindrique (13).

5. Système prétensionneur de ceinture selon la revendication 4, **caractérisé en ce que** l'ensemble piston-cylindre (11) est fixé à la ferrure de renvoi (9).

6. Système prétensionneur de ceinture selon la revendication 5, **caractérisé en ce que** l'ensemble piston-cylindre (11) possède à son extrémité axiale éloignée de la tige de poussée (25) une saillie (37) en forme de champignon qui est arrêtée dans une ouverture en trou de serrure (39) dans la ferrure de renvoi (9).

7. Système prétensionneur de ceinture selon la revendication 6, **caractérisé en ce que** l'ouverture en trou de serrure (39) est fermée par la fixation de la ferrure de renvoi (9).

8. Système prétensionneur de ceinture selon l'une des revendications précédentes, **caractérisé en ce que** le cylindre (213 ; 313) est de section transversale ovale ou rectangulaire.

9. Système prétensionneur de ceinture selon l'une des revendications précédentes, **caractérisé en ce qu'**il est prévu plusieurs ensembles piston-cylindre (11) avec des cylindres (113) parallèles et **en ce que** les tiges de poussée (25) associées sont accouplées les unes aux autres.

10. Système prétensionneur de ceinture selon l'une des revendications précédentes, **caractérisé en ce que** la tige de poussée (25) est fixée directement au piston (15) et s'étend vers l'extérieur à travers l'extrémité ouverte du cylindre (13), qui est éloignée de l'entraînement (21).
